# EUROPÄISCHE PATENTSCHRIFT

(11) **EP 1 160 833 B1**
(45) Veröffentlichungstag und Bekanntmachung des Hinweises auf die Patenterteilung: **23.11.2005**
(21) Anmeldenummer: 01000193.1
(22) Anmeldetag: 30.05.2001
(51) Int. Cl.: H01J 61/40

(54) **Farbige elektrische Lampe mit farbpigmenthaltiger Beschichtung**
Coloured electric lamp with coating containing colour pigments
Lampe électrique colorée avec une couche contenant des pigments colorés

(30) Priorität: 31.05.2000 DE 10026908
(43) Veröffentlichungstag der Anmeldung: 05.12.2001
(73) Patentinhaber: Philips Intellectual Property & Standards GmbH, 20099 Hamburg (DE); Koninklijke Philips Electronics N.V., 5621 BA Eindhoven (NL)
(72) Erfinder: Opitz, Joachim, Dr., c/o Philips Corporate, 52064 Aachen (DE); Ceulemans, Sonja, c/o Philips Corporate, 52064 Aachen (DE)
(74) Vertreter: Volmer, Georg

(56) Entgegenhaltungen:
- US-A- 5 744 900
- US-A- 5 766 336

## Beschreibung

Die Erfindung betrifft eine farbige elektrische Lampe, die mit einer elektrischen Lichtquelle in einem lichtdurchlässigem Kolben, der einen Überzug mit einem anorganisches Farbpigment aufweist, und mit Mitteln zum Betrieb der elektrischen Lichtquelle ausgerüstet ist.

Elektrische Lampen, die farbiges Licht in den Farben Rot, Grün, Blau und Gelb oder in Pastelltönen ausstrahlen, sind für die dekorative Beleuchtung von Außen- und Innenräumen beliebt. Ein Nachteil konventioneller Lampen dieser Art ist es, dass die verwendeten Farbpigmente häufig giftige und umweltslchädlihe Substanzen, wie Cadmium, Selen oder Chromate enthalten.

Aus US 5,744, 900 ist es bereits bekannt, die Verwendung von cadmium- und selenhaltiger Pigmente für farbige Lampen zu vermeiden. Vorgeschlagen wird eine elektrische Lampe, die im Betriebszustand rosa leuchtet, und die mit einem lichtdurchlässigen Kolben ausgerüstet ist, der eine elektrische Lichtquelle umfaßt und eine rosa Beschichtung aufweist. Die Beschichtung enthält ein rosafarbiges anorganische Chrom-Zinn-Pigment und rotes Eisenoxid. Bei diesen Lampen ist es von Nachteil, dass Eisenoxid-Pigmenten zum Nachdunkeln neigen.

Es ist eine Aufgabe der vorliegenden Erfindung eine farbige elektrische Lampe zur Verfügung zu stellen, die keine giftigen und umweltschädlichen Substanzen enthält und die eine lange Lebensdauer beim Betrieb im Innen- und Außenbereich hat.

Erfindung wird die Aufgabe gelöst, durch eine elektrische Lampe, die mit einer elektrischen Lichtquelle in einem lichtdurchlässigem Kolben, der eine Beschichtung aufweist, die ein anorganisches Farbpigment enthält, das ausgewählt ist aus der Gruppe der Oxidnitrid-Pigment mit der allgemeinen Formel
A₁₋ₓA'ₓBO₂₋ₓN₁₊ₓ mit A= Mg, Ca, Sr, Ba, Zn, A' = Ln, Bi, Al, Fe, B= V, Nb, Ta, Mo, W und B' = Ti, Zr, Hf, Sn, Ge, Si, Nb, Ta und 0 < x < 1
oder ein Oxidnitrid-Pigment der allgemeinen Formel
AB₁₋ₓB'ₓBO₁₊ₓN₂₋ₓ mit A = Mg, Ca, Sr, Ba, Zn, A' = Ln, Bi, Al, Fe, B= V, Nb, Ta, Mo, W und B' = Ti, Zr, Hf, Sn, Ge, Si, Nb, Ta und 0 < x < 1
oder ein Oxidnitrid-Pigment der allgemeinen Formel
A_{y}A'_{2-y}B₂O_{5+y}N_{2-y} mit A = Mg, Ca, Sr. Ba, Zn, A' = Ln, Bi, Al, Fe, B= V, Nb, Ta, Mo, W und B' = Ti, Zr, Hf, Sn, Ge, Si, Nb, Ta und 0 <y<2
oder ein Oxidnitrid-Pigment der allgemeinen Formel
A'₂B_{2-y}B'_{y}O_{5+y}N_{2-y} mit A= Mg, Ca, Sr. Ba, Zn, A' = Ln, Bi, Al, Fe, B= V, Nb, Ta, Mo, W und B' = Ti, Zr, Hf, Sn, Ge, Si, Nb, Ta und 0 <y<2
oder ein Oxidnitrid-Pigment der allgemeinen Formel
CD₂₋ₘD'ₘO₄₋ₘNₘ mit C = Mg, Ca, Mn, Fe, Co, Ni, Zn und D = Al, Ga, In, Ti, V, Cr, Fe, Co, Ni und D' = Ti, Zr, HF, Sn, Ge, Si, Nb, Ta, und 0 < m < 2
oder ein Oxidnitrid-Pigment der allgemeinen Formel
C₁₋ₙC'ₙD₂O₄₋ₙNₙ mit C = Mg, Ca, Mn, Fe, Co, Ni, Zn, C' = Al, Ga, In, Ti, V, Cr, Fe, Co, Ni, D = Al, Ga, In, Ti, V, Cr, Fe, Co, Ni und 0 <n <2
oder ein Oxidnitrid-Pigment der allgemeinen Formel
A'₂CBO₅N mit A' = Ln, Bi, Al, Fe, C=Mg, Ca, Mn, Fe, Co, Ni, Zn, B= V, Nb, Ta, Mo, W
oder ein Oxidnitrid-Pigment der allgemeinen Formel
A'₂A''BO₄N₂ mit A' = Ln, Bi, Al, Fe, A" = Ln, Bi, B = V, Nb, Ta, Mo, W
oder ein Oxidnitrid-Pigment der allgemeinen Formel
A'₂DBO₃N₃ mit A' = Ln, Bi, Al, Fe, D = Al, Ga, In, Ti, V, Cr, Fe, Co, Ni
und B = V, Nb, Ta, Mo, W
und mit Mitteln zum Betrieb der elektrischen Lichtquelle ausgerüstet ist.

Eine Lampe dieser Art weist ein Färbung im roten, orangen oder gelben Spektrum auf, die weder bei erhöhter Temperatur noch in Berührung mit reaktiven Gasen nachdunkelt.

Sie enthält keine toxikologisch bedenklichen Farbpigmente und kann daher problemlos wiederaufbereitet oder in Müllverbrennungsanlagen entsorgt werden.
Im Rahmen der vorliegenden Erfindung, ist es bevorzugt, dass die elektrische Lampe eine Glühlampe ist. Weil die verwendeten Pigmente chemisch inert sind, muß eine derartige Glühlampe nicht mit Inertgas gefüllt werden, sondern kann evakuiert werden. Das ist von Vorteil, weil evakuierte elektrische Glühlampen sicherer in der Handhabung sind. Durch das Vakuum im Kolben wird verhindert, dass die Lampe bei einem. Temperaturschock platzt, wenn z.B. im Außenbereich die heiße Lampe mit Wasser oder Regen in Kontakt kommt.

Da die Oxidnitrid-Farbpigmente nicht nur chemisch inert sondern auch thermisch stabil sind, kann die Beschichtung, die die Oxidnitrid-Farbpigmente enthält, an der Innenseite des Kolbens angebracht werden.

Zum Abtönen der Farbe kann der Überzug zusätzlich ein Weißpigment enthalten.

Nachfolgend wird die Erfindung anhand von zwei Ausführungsbeispielen weiter erläutert. Prinzipiell kann die elektrische Lampe als eine Glühlampe oder eine Gasentladungslampe ausgeführt sein. Nach einer bevorzugten Ausführungsform der Erfindung ist die elektrische Lampe eine Glühlampe, bei der die Lichtquelle ein Glühdraht aus hochschmelzendem Metall ist. Der Glühdraht ist als Einfach- oder Doppelwendel ausgebildet und wird in einem Kolben aus Glas oder Quarz zwischen zwei Stromzuführungselektroden gehalten.

Der Kolben ist mit einer Beschichtung, die ein Oxidnitrid-Farbpigment aus der Gruppe der Oxidnitride mit der allgemeinen Formel
A₁₋ₓA'ₓBO₂₋ₓN₁₊ₓ mit A= Mg, Ca, Sr, Ba, Zn, A' = Ln, Bi, Al, Fe, B= V, Nb, Ta, Mo, W und B' =Ti, Zr, Hf, Sn, Ge, Si, Nb, Ta und 0 < x < 1
oder ein Oxidnitrid-Pigment der allgemeinen Formel
AB₁₋ₓB'ₓBO₁₊ₓN₂₋ₓ mit A = Mg, Ca, Sr, Ba, Zn, A' = Ln, Bi, Al, Fe, B= V, Nb, Ta, Mo, W und B' = Ti, Zr, Hf, Sn, Ge, Si, Nb, Ta und 0 < x < 1
oder ein Oxidnitrid-Pigment der allgemeinen Formel
A_{y}A'_{2-y}B₂O_{5+y}N_{2-y} mit A = Mg, Ca, Sr. Ba, Zn, A' = Ln, Bi, Al, Fe, B= V, Nb, Ta, Mo, W und B' = Ti, Zr, Hf, Sn, Ge, Si, Nb, Ta und 0 < y < 2
oder ein Oxidnitrid-Pigment der allgemeinen Formel
A'₂B_{2-y}B'_{y}O_{5+y}N_{2-y} mit A = Mg, Ca, Sr. Ba, Zn, A' = Ln, Bi, Al, Fe, B= V, Nb, Ta, Mo, W und B' = Ti, Zr, Hf, Sn, Ge, Si, Nb, Ta und 0 <y<2
oder ein Oxidnitrid-Pigment der allgemeinen Formel
CD₂₋ₘD'ₘO₄₋ₘNₘ mit C = Mg, Ca, Mn, Fe, Co, Ni, Zn und D = Al, Ga, In, Ti, V, Cr, Fe, Co, Ni und D' = Ti, Zr, HF, Sn, Ge, Si, Nb, Ta, und 0 < m < 2
oder ein Oxidnitrid-Pigment der allgemeinen Formel.
C₁₋ₙC'ₙD₂O₄₋ₙNₙ mit C = Mg, Ca, Mn, Fe, Co, Ni, Zn, C' = Al, Ga, In, Ti, V, Cr, Fe, Co, Ni, D = Al, Ga, In, Ti, V, Cr, Fe, Co, Ni und 0 <n <2
oder ein Oxidnitrid-Pigment der allgemeinen Formel
A₂CBO₅N mit A' = Ln, Bi, Al, Fe, C=Mg, Ca, Mn, Fe, Co, Ni, Zn, B= V, Nb, Ta, Mo, W
oder ein Oxidnitrid-Pigment der allgemeinen Formel
A'₂A"BO₄N₂ mit A' = Ln, Bi, Al, Fe, A" = Ln, Bi, B = V, Nb, Ta, Mo, W
oder ein Oxidnitrid-Pigment der allgemeinen Formel
A'₂DBO₃N₃ mit A' = Ln, Bi, Al, Fe, D = Al, Ga, In, Ti, V, Cr, Fe, Co, Ni
und B = V, Nb, Ta, Mo, W enthält, beschichtet. Diese Pigmente und Verfahren zu ihrer Herstellung sind aus EP 0697 373 bekannt.

Die Eigenschaften der Oxidnitrid-Farbpigmente unterliegen der Mischungsregel, dh die Eigenschaften ändern sich kontinuierlich mit der Zusammensetzung, die Farbe der Pigmente variiert je nach Zusammensetzung von Rot über Orange nach Gelb. Je nach Partikelgröße der Pigmente sind die erhaltenen Beschichtungen transparent oder deckend.

Bevorzugt wird der Kolben an seiner Innenseite beschichtet.

Zur Herstellung der Beschichtung geht man von dem Pigment oder einer Pigmentmischung aus Die Pigmentmischung kann ein oder mehrere Oxidnitrid-Farbpigmente enthalten, zusätzlich kann noch ein Weißpigment zugefügt werden. Geeignete Weißpigmente sind beispielweise Kaolin, Feldspat, Siliciumdioxid oder Titandioxid

Eine Pigmentmischung wird durch trockenes Mischen der Pigmentpulver hergestellt. Eine typische Mischung besteht aus 20 Gew-% Titandioxid, 50 Gew.-% pyrogener Kieselsäure und 30 Gew.-% Fällungskieselsäure, die mit einem Oxidnitrid-Pigment im Verhältnis 4 zu 1 gemischt werden.
Als Herstellungsverfahren für diese Schichten kommen sowohl Trockenbeschichtungsverfahren, wie z B. elektrostatische Abscheidung oder elektrostatisch unterstütztes Bestäuben, als auch ein Nassbeschichtungsverfahren wie z.B. Tauchen oder Sprühen in Betracht.

Für Nassbeschichtungsverfahren müssen die Pigmente in Wasser, einem organischen Lösemittel, gegebenenfalls zusammen mit einem Dispergiermittel, einem Tensid und einem Antischaummittel, oder einer Bindemittelzubereitung dispergiert werden. Geeignet für Bindemittelzubereitungen für eine Lampe nach der Erfindung sind organische oder anorganische Bindemittel, die einer Betriebstemperatur von 250°C ohne Zersetzung, Versprödung oder Verfärbung überstehen.

Bevorzugt wird die Pigmentmischung elektrostatisch auf der Innenseite des Lampenkolbens abgeschieden. Die Oxidnitrid-Pigment-haltige Beschichtung hat eine Schichtdicke von 50 bis 100 µm.

Der beschichtete Lampenkolben wird mit einem Filament versehen, evakuiert und abgeschmolzen. Die nach außen durchgeführten elektrischen Kontakte des Filaments werden mit dem Metallsockel der Lampe verbunden.

Abhängig von der Wahl des Oxidnitrid-Pigmentes und der Zusammensetzung der Pigmentmischung erhält man eine Lampe mit einer Farbe aus dem roten bis gelben Farbspektrum, zusammen mit Weißpigmenten auch die zugehörigen Pastelltöne.

### Ausführungsbeispiel 1

Eine Mischung von50 g pyrogener Kieselsäure, 270 g Fällungskieselsäure, 30 g Tiandioxid (Rutil) und 50 g rotes Oxidnitrid-Farbpigment wurden in einer Schwingmühle trocken gemahlen und gemischt. Man erhält ein frei fließendes Pulvergemisch, das keine sichtbaren Inhomogenitäten zeigt. Die Mischung wurde auf die Innenseite eines Lampenkolbens elektrostatisch abgeschieden. Die Beschichtung hat eine Dicke von 75 µm. Der Glaskolben wurde mit einer Wolframdrahtwendel bestückt, bei 500°C ausgeheizt, evakuiert und augeschmolzen. Es wurde ein Metallsockel angesetzt. Die Lampe zeigt im Betriebszustand ein dekoratives rotes Licht. Die Lebensdauer betrug mehr als 1000 Stunden

### Ausführungsbeispiel 2

Eine Mischung von250 g Feldspat, 70 g pyrogener Kieselsäure, 25 g Tiandioxid (Rutil), 30 g gelbes und 25 g rotes Oxidnitrid-Farbpigment wurden in einer Schwingmühle trocken gemahlen und gemischt. Man erhält ein frei fließendes Pulvergemisch, das keine sichtbaren Inhomogenitäten zeigt. Die Mischung wurde auf die Innenseite eines Lampenkolbens elektrostatisch abgeschieden. Die Beschichtung hat eine Dicke von 85 µm. Der Glaskolben wurde mit einer Wolframdrahtwendel bestückt, bei 500°C ausgeheizt, evakuiert und abgeschmolzen. Es wurde ein Metallsockel angesetzt. Die Lampe zeigt im Betriebszustand ein dekoratives orange-farbenes Licht. Die Lebensdauer betrug mehr als 1000 Stunden.

## Patentansprüche

1. Elektrische Lampe, die mit einer elektrischen Lichtquelle in einem lichtdurchlässigem Kolben, der eine Beschichtung mit einem anorganischen Farbpigment aufweist, das ausgewählt ist aus der Gruppe der Oxidnitrid-Pigmente mit der allgemeinen Formel
A₁₋ₓA'ₓBO₂₋ₓN₁₊ₓ mit A = Mg, Ca, Sr, Ba, Zn, A' = Ln, Bi, Al, Fe, B= V, Nb, Ta, Mo, W und B' = Ti, Zr, Hf, Sn, Ge, Si, Nb, Ta und 0 < x < 1
oder ein Oxidnitrid-Pigment der allgemeinen Formel
AB₁₋ₓB'ₓBO₁₊ₓN₂₋ₓ mit A= Mg, Ca, Sr, Ba, Zn, A' = Ln, Bi, Al, Fe, B= V, Nb, Ta, Mo, W und B' = Ti, Zr, Hf, Sn, Ge, Si, Nb, Ta und 0 < x < 1
oder ein Oxidnitrid-Pigment der allgemeinen Formel
A_{y}A'_{2-y}B₂O_{5+y}N_{2-y} mit A = Mg, Ca, Sr. Ba, Zn, A' = Ln, Bi, Al, Fe, B= V, Nb, Ta, Mo, W und B' = Ti, Zr, Hf, Sn, Ge, Si, Nb, Ta und 0 < y < 2
oder ein Oxidnitrid-Pigment der allgemeinen Formel
A'₂B_{2-y}B'_{y}O_{5+y}N_{2-y} mit A = Mg, Ca, Sr. Ba, Zn, A' = Ln, Bi, Al, Fe, B= V, Nb, Ta, Mo, W und B' = Ti, Zr, Hf, Sn, Ge, Si, Nb, Ta und 0<y<2
oder ein Oxidnitrid-Pigment der allgemeinen Formel
CD₂₋ₘD'ₘO₄₋ₘNₘ mit C = Mg, Ca, Mn, Fe, Co, Ni, Zn und D = Al, Ga, In, Ti, V, Cr, Fe, Co, Ni und D = Ti, Zr, HF, Sn, Ge, Si, Nb, Ta, und 0 < m < 2
oder ein Oxidnitrid-Pigment der allgemeinen Formel
C₁₋ₙC'ₙD₂O₄₋ₙNₙ mit C = Mg, Ca, Mn, Fe, Co, Ni, Zn, C' = Al, Ga, In, Ti, V, Cr, Fe, Co, Ni, D = Al, Ga, In, Ti, V, Cr, Fe, Co, Ni und 0 <n <2
oder ein Oxidnitrid-Pigment der allgemeinen Formel
A'₂CBO₅N mit A' = Ln, Bi, Al, Fe, C=Mg, Ca, Mn, Fe, Co, Ni, Zn, B= V, Nb, Ta, Mo, W
oder ein Oxidnitrid-Pigment der allgemeinen Formel
A'₂A"BO₄N₂ mit A' = Ln, Bi, Al, Fe, A" = Ln, Bi, B = V, Nb, Ta, Mo, W
oder ein Oxidnitrid-Pigment der allgemeinen Fomel
A'₂DBO₃N₃ mit A' =Ln, Bi, Al, Fe, D = Al, Ga, In, Ti, V, Cr, Fe, Co, Ni und B = V, Nb, Ta, Mo, W
und mit Mitteln zum Betrieb der elektrischen Lichtquelle ausgerüstet ist.

2. Elektrische Lampe gemäß Anspruch 1,
**dadurch gekennzeichnet,**
**dass** die elektrische Lampe eine Glühlampe ist.

3. Elektrische Lampe gemäß Anspruch 1,
**dadurch gekennzeichnet,**
**dass** die Beschichtung an der Innenseite des Kolbens angebracht ist.

4. Elektrische Lampe gemäß Anspruch 1,
**dadurch gekennzeichnet,**
**dass** die Beschichtung zusätzlich ein Weißpigment enthält.

## Claims

1. An electric lamp which is provided with an electric light source in a light-transmitting bulb provided with a coating comprising an inorganic colored pigment selected from the group formed by oxide nitride pigments of the general formula
A₁₋ₓA'ₓBO₂₋ₓN₁₊ₓ, wherein A = Mg, Ca, Sr, Ba, Zn, A' = Ln, Bi, Al, Fe, B= V, Nb, Ta, Mo, W and B' = Ti, Zr, Hf, Sn, Ge, Si, Nb, Ta and 0 < x < 1
or an oxide-nitride pigment of the general formula
AB₁₋ₓB'ₓBO₁₊ₓN₂₋ₓ, wherein A = Mg, Ca, Sr, Ba, Zn, A' = Ln, Bi, Al, Fe, B= V, Nb, Ta, Mo, W and B' = Ti, Zr, Hf, Sn, Ge, Si, Nb, Ta and 0 < x < 1
or an oxide-nitride pigment of the general formula
A_{y}A'_{2-y}B₂O_{5+y}N_{2-y}, wherein A = Mg, Ca, Sr. Ba, Zn, A' = Ln, Bi, Al, Fe, B= V, Nb, Ta, Mo, W and B' = Ti, Zr, Hf, Sn, Ge, Si, Nb, Ta and 0 < y < 2
or an oxide-nitride pigment of the general formula
A'₂B_{2-y}B'_{y}O_{5+y}N_{2-y}, wherein A = Mg, Ca, Sr. Ba, Zn, A' = Ln, Bi, Al, Fe, B= V, Nb, Ta, Mo, W and B' = Ti, Zr, Hf, Sn, Ge, Si, Nb, Ta and 0 < y < 2
or an oxide-nitride pigment of the general formula
CD₂₋ₘD'ₘO₄₋ₘNₘ, wherein C = Mg, Ca, Mn, Fe, Co, Ni, Zn and D = Al, Ga, In, Ti, V, Cr, Fe, Co, Ni and D' = Ti, Zr, HF, Sn, Ge, Si, Nb, Ta, and 0 < m < 2
or an oxide-nitride pigment of the general formula
C₁₋ₙC'ₙD₂O₄₋ₙNₙ, wherein C = Mg, Ca, Mn, Fe, Co, Ni, Zn, C' = Al , Ga, In, Ti, V, Cr, Fe, Co, Ni, D = Al, Ga, In, Ti, V, Cr, Fe, Co, Ni and 0 < n < 2
or an oxide-nitride pigment of the general formula
A'₂CBO₅N, wherein A' = Ln, Bi, Al, Fe, C=Mg, Ca, Mn, Fe, Co, Ni, Zn, B= V, Nb, Ta, Mo, W
or an oxide-nitride pigment of the general formula
A'₂A"BO₄N₂, wherein A' = Ln, Bi, Al, Fe, A" = Ln, Bi, B = V, Nb, Ta, Mo, W
or an oxide-nitride pigment of the general formula
A'₂DBO₃N₃, wherein A' = Ln, Bi, Al, Fe, D = Al, Ga, In, Ti, V, Cr, Fe, Co, Ni
and B = V, Nb, Ta, Mo, W
and with means for operating the electric light source.

2. An electric lamp as claimed in claim 1, **characterized in that** the electric lamp is an incandescent lamp.

3. An electric lamp as claimed in claim 1, **characterized in that** the coating is provided on the inside of the bulb.

4. An electric lamp as claimed in claim 1, **characterized in that** the coating additionally comprises a white pigment.

## Revendications

1. Lampe électrique équipée d'une source lumineuse électrique dans une ampoule perméable à la lumière dotée d'un revêtement comprenant un pigment coloré inorganique choisi dans le groupe des pigments de nitrure-oxyde de la formule générale
A₁₋ₓA'ₓBO₂₋ₓN₁₊ₓ, dans laquelle A = Mg, Ca, Sr, Ba, Zn, A' = Ln, Bi, Al, Fe, B= V, Nb, Ta, Mo, W et B' = Ti, Zr, Hf, Sn, Ge, Si, Nb, Ta et 0 < x < 1
ou un pigment de nitrure-oxyde de la formule générale
AB₁₋ₓB'ₓBO₁₊ₓN₂₋ₓ, dans laquelle A = Mg, Ca, Sr, Ba, Zn, A'= Ln, Bi, Al, Fe, B= V, Nb, Ta, Mo, W et B' = Ti, Zr, Hf, Sn, Ge, Si, Nb, Ta et 0 < x < 1
ou un pigment de nitrure-oxyde de la formule générale
A_{y}A'_{2-y}B₂O_{5+y}N_{2-y}, dans laquelle A = Mg, Ca, Sr. Ba, Zn, A' = Ln, Bi, Al, Fe, B= V, Nb, Ta, Mo, W et B' = Ti, Zr, Hf, Sn, Ge, Si, Nb, Ta et 0 < y < 2
ou un pigment de nitrure-oxyde de la formule générale
A'₂B_{2-y}B'_{y}O_{5+y}N_{2-y}, dans laquelle A = Mg, Ca, Sr. Ba, Zn, A' = Ln, Bi, Al, Fe, B= V, Nb, Ta, Mo, W et B' = Ti, Zr, Hf, Sn, Ge, Si, Nb, Ta et 0 < y < 2
ou un pigment de nitrure-oxyde de la formule générale
CD₂₋ₘD'ₘO₄₋ₘNₘ, dans laquelle C = Mg, Ca, Mn, Fe, Co, Ni, Zn et D = Al, Ga, In, Ti, V, Cr, Fe, Co, Ni et D' = Ti, Zr, HF, Sn, Ge, Si, Nb, Ta, et 0 < m < 2
ou un pigment de nitrure-oxyde de la formule générale
C₁₋ₙC'ₙD₂O₄₋ₙNₙ, dans laquelle C = Mg, Ca, Mn, Fe, Co, Ni, Zn, C' = Al , Ga, In, Ti, V, Cr, Fe, Co, Ni, D = Al, Ga, In, Ti, V, Cr, Fe, Co, Ni et 0 < n < 2
ou un pigment de nitrure-oxyde de la formule générale
A'₂CBO₅N, dans laquelle A' = Ln, Bi, Al, Fe, C=Mg, Ca, Mn, Fe, Co, Ni, Zn, B= V, Nb, Ta, Mo, W
ou un pigment de nitrure-oxyde de la formule générale
A'₂A"BO₄N₂, dans laquelle A' = Ln, Bi, Al, Fe, A" = Ln, Bi, B = V, Nb, Ta, Mo, W ou un pigment de nitrure-oxyde de la formule générale
A'₂DBO₃N₃, dans laquelle A'= Ln, Bi, Al, Fe, D = Al, Ga, In, Ti, V, Cr, Fe, Co, Ni
et B = V, Nb, Ta, Mo, W
et avec des moyens pour faire fonctionner la source lumineuse électrique.

2. Lampe électrique selon la revendication 1,
**caractérisée en ce**
**que** la lampe électrique est une lampe à incandescence.

3. Lampe électrique selon la revendication 1,
**caractérisée en ce**
**que** le revêtement est appliqué à l'intérieur de l'ampoule.

4. Lampe électrique selon la revendication, 1,
**caractérisée en ce**
**que** le revêtement comprend par ailleurs un pigment blanc.
